# EUROPÄISCHE PATENTSCHRIFT

(11) **EP 2 158 057 B1**
(45) Veröffentlichungstag und Bekanntmachung des Hinweises auf die Patenterteilung: **22.08.2018**
(21) Anmeldenummer: 08801455.0
(22) Anmeldetag: 09.06.2008
(51) Int. Cl.: B23K 9/02, B23K 26/24, B23P 19/10, B23K 31/02, B23K 101/36

(54) **FUNDAMENTRAHMEN ODER MOTORSCHWINGE FÜR EINE GETRIEBE-MOTOR-EINHEIT UND VERFAHREN**
BASE FRAME OR ENGINE ROCKER FOR A TRANSMISSION-ENGINE UNIT, AND METHOD
CADRE DE BASE OU BRAS OSCILLANT POUR UNITÉ À MOTORÉDUCTEUR, ET PROCÉDÉ CORRESPONDANT

(30) Priorität: 18.06.2007 DE 102007028446
(43) Veröffentlichungstag der Anmeldung: 03.03.2010
(73) Patentinhaber: SEW-EURODRIVE GmbH & Co. KG, 76646 Bruchsal (DE)
(72) Erfinder: LAUER, Christian, 67378 Zeiskam (DE)
(74) Vertreter: Tüngler, Eberhard
(86) Internationale Anmeldenummer: PCT/EP2008/004579
(87) Internationale Veröffentlichungsnummer: WO 2008/155036

(56) Entgegenhaltungen:
- WO-A-97/27045
- WO-A2-97/27045
- WO-A2-97/27045
- DD-A1- 222 380
- DD-A1- 222 380
- DD-A1- 222 380
- GB-A- 2 314 906
- GB-A- 2 314 906
- GB-A- 2 314 906
- US-A- 1 630 037
- US-A- 1 630 037
- US-A- 1 630 037
- US-A- 1 893 699
- US-A- 1 893 699
- US-A- 4 030 849
- US-A- 4 030 849
- US-A- 4 096 373
- US-A- 4 096 373

## Beschreibung

Die Erfindung betrifft einen Fundamentrahmen und der Motorschwinge, eine Getriebe-Motor-Einheit, ein Verfahren zur Herstellung einer Getriebe-Motor-Einheit und eine Baureihe von Getriebe-Motor-Einheiten

Aus der DE 27 00 720 A1 ist ein Verfahren zur Herstellung einer Schweißnaht mit einem ungeschweißten Abschnitt bekannt, bei dem eine Kehlnahtschweißung zum Zusammenschweißen von rechtwinklig zueinander ausgerichteten Metallwerkstücken auf einem Füller durchgeführt wird, wobei der Füller aus einem schlackebildenden Material, aus Werkstoffen mit hohem Schmelzpunkt, die durch einen Schweißlichtbogen nicht angeschmolzen werden, oder Kupfer in Form eines wassergekühlten Rohres besteht und zur Vermeidung von Ermüdungsrissen für die Festlegung und Aufrechterhaltung eines zweckmäßigen Radius einer entsprechenden Aussparung im Schweißwulstmetall einen halbkreisförmigen Querschnitt besitzt.

Aus der US 1 630 037 A ist eine elektrisch geschweißte Einheit bekannt.

Aus der WO 97/27045 A2 ist eine Metall-Sandwich-Struktur bekannt.

Aus der DD 222 380 A1 ist eine gemeinsame Grundplatte für Arbeitsmaschinen bekannt.

Aus der GB 2 314 906 A ist eine ausrichtbare Maschinenbefestigung bekannt.

Aus der US 4 096 373 A ist eine Schweißanordnung bekannt.

Aus der US 4 030 849 A ist eine Wandkonstruktion mit Metallschichten bekannt.

Aus der US 1 893 699 A ist als nächstliegender Stand der Technik ein Fundamentrahmen nach dem Oberbegriff des Anspruch 1 bekannt.
Der Erfindung liegt die Aufgabe zugrunde, eine Baureihe von Getriebe-Motor-Einheiten weiterzubilden, wobei Herstellungskosten verringert werden sollen.
Erfindungsgemäß wird die Aufgabe bei dem Fundamentrahmen und der Motorschwinge nach den in Anspruch 1 angegebenen Merkmalen, bei der Getriebe-Motor-Einheit nach den in Anspruch 3 angegebenen Merkmalen, bei dem Verfahren zur Herstellung einer Getriebe-Motor-Einheit nach den in Anspruch 4 angegebenen Merkmalen und bei der Baureihe von Getriebe-Motor-Einheiten nach den in Anspruch 5 angegebenen Merkmalen gelöst.
Zur Lösung der Aufgabe ist bei Erfindung einer Verbindung eines ersten Teils mit einem zweiten Teil vorgesehen, dass das erste Teil mit dem zweiten Teil stoffschlüssig verbunden ist, wobei zwischen ersten Teil und zweiten Teil ein Abstand eingehalten ist, der von der stoffschlüssigen Verbindung überbrückt wird, dass der Abstand durch ein Ausgleichselement, vorzugsweise eine Unterlegscheibe oder dergleichen Blechstück, ausgefüllt wird und die stoffschlüssige Verbindung durch mindestens eine Schweißnaht gebildet wird, wobei die Schweißnaht das Ausgleichselement oder einen den Abstand ausfüllenden Hohlraum zumindest teilweise umgibt, dass die Schweißnaht ganz oder abschnittsweise um das Ausgleichselement herumgeführt ist, insbesondere so herumgeführt ist, dass das Ausgleichselement nicht herausfallen kann, und dass die Schweißnaht das Ausgleichselement nicht direkt berührt. Vorzugsweise weist das Ausgleichsstück eine gleichmäßige Dicke auf und als Stanzteil oder zugeschnittenes Teil ohne weitere Bearbeitung, insbesondere ohne halbkreisförmiges Abrunden der Ränder, ausgebildet. Die Schweißnaht kann das Ausgleichselement auf zwei oder mehr Seiten umgeben und so ein Herausfallen des Ausgleichselements in einer Richtung oder in allen Richtungen verhindern..
Gemäß einer Ausgestaltung der Erfindung kann vorgesehen sein, dass das erste Teil mit dem zweiten Teil stoffschlüssig verbunden ist, wobei zwischen ersten Teil und zweiten Teil ein Abstand eingehalten ist, der von der stoffschlüssigen Verbindung überbrückt wird. Von Vorteil ist dabei, dass die stoffschlüssige Verbindung mindestens zwei Funktionen ausfüllt: Zum einen werden das erste Teil und das zweite Teil relativ zueinander fixiert, zum anderen werden das erste Teil und das zweite Teil so zueinander positioniert, dass ein gewünschtes Gesamtbaumaß erreicht wird, das größer ist als die Summe der Einzelbaumaße von erstem und zweitem Teil. Somit sind Teile mit standardisierten Baumaßen einsetzbar, ohne dass zum Erreichen des gewünschten Baumaßes ein spanendes Fertigungsverfahren, beispielsweise Fräsen, Schleifen oder Hobeln, eingesetzt werden muss. Es sind daher Fertigungsverfahren und auch das Aufspannen und Einrichten zur Bearbeitung eingespart und daher die Herstellungskosten verringert.
Bei einer vorteilhaften Ausgestaltung wird der Abstand durch ein Ausgleichselement ausgefüllt. Somit ist vorteilhaft der Abstand der Teile vorgebbar. Als Ausgleichselemente sind beispielsweise Unterlegscheiben, Normbleche oder Distanzscheiben einsetzbar. Einrichtmittel zum Einrichten des gewünschten Abstands sind verzichtbar. Gemäß der Erfindung wird die stoffschlüssige Verbindung durch mindestens eine Schweißnaht gebildet, die das Ausgleichselement oder einen den Abstand ausfüllenden Hohlraum zumindest teilweise umgibt. Somit ist die Höhe der Schweißnaht, also des beim Schweißen eingebrachten Schweißzusatzwerkstoffs, nutzbar für die Einrichtung des gewünschten Maßes, indem das Ausgleichselement oder die Ausgleichselemente seitlich durch die Schweißnaht überbrückt werden. Das erste Teil ist mit dem zweiten Teil ohne zusätzlichen Teileaufwand verbindbar. Besonders vorteilhaft ist, dass die Schweißnaht nicht einen festen Abstand der zu verbindenden Teile erfordert, sondern innerhalb eines Bereichs variierbar ist. Zum Überbrücken des Abstands wird beim Schweißen soviel Schweißzusatzwerkstoff eingesetzt, wie benötigt wird. Somit müssen keine zusätzlichen Brückenteile vorgehalten werden. Die Schweißnaht wird ganz oder abschnittsweise um das Ausgleichselement herum geführt, so dass das Ausgleichselement in der eingelegten Position gesichert ist. Somit ist zum einen die geschweißte Verbindung verstärkt, insbesondere gegen Druck der Teile gegeneinander, und zum anderen kann das Ausgleichselement nicht herausfallen und die Anlage, in der die Verbindung eingesetzt wird, beschädigen. Es wird daher ein weiterer Arbeitsschritt eingespart, nämlich das Entfernen des Ausgleichselements, und die Fertigungskosten werden vermindert.

Zur Lösung der Aufgabe kann bei der Verbindung alternativ vorgesehen sein, dass das erste Teil mit dem zweiten Teil stoffschlüssig verbunden ist, wobei zwischen ersten Teil und zweiten Teil ein Abstand eingehalten ist, der von der stoffschlüssigen Verbindung überbrückt wird, der Abstand durch ein Ausgleichselement, vorzugsweise eine Unterlegscheibe oder dergleichen Blechstück, ausgefüllt wird und die stoffschlüssige Verbindung durch mindestens eine Schweißnaht gebildet wird, die das Ausgleichselement oder einen den Abstand ausfüllenden Hohlraum zumindest teilweise umgibt, wobei die Schweißnaht nicht das erste Teil mit dem Ausgleichselement und nicht das zweite Teil mit dem Ausgleichselement verbindet und nicht das Ausgleichselement berührt oder mit dessen Oberfläche in direktem Kontakt steht.
Zur Lösung der Aufgabe kann bei der Verbindung alternativ vorgesehen sein, dass das erste Teil mit dem zweiten Teil stoffschlüssig verbunden ist, wobei zwischen ersten Teil und zweiten Teil ein Abstand eingehalten ist, der von der stoffschlüssigen Verbindung überbrückt wird, und wobei der Abstand durch ein Ausgleichselement, vorzugsweise eine Unterlegscheibe oder dergleichen Blechstück, ausgefüllt wird wobei das Ausgleichselement nicht aus einem schlackebildenden Material, aus Werkstoffen mit hohem Schmelzpunkt, die durch einen Schweißlichtbogen nicht angeschmolzen werden, oder Kupfer in Form eines wassergekühlten Rohres besteht, und/oder die stoffschlüssige Verbindung durch mindestens eine Schweißnaht gebildet wird, die das Ausgleichselement oder einen den Abstand ausfüllenden Hohlraum zumindest teilweise, vorzugsweise zumindest abschnittsweise an allen offenen Seiten des Hohlraums, umgibt und die das Ausgleichselement nicht direkt berührt. Da die Schweißnaht das Ausgleichselement nicht direkt berührt, also nicht mit diesem in Kontakt steht, ist eine besondere Materialwahl, durch die das Ausgleichselement bei Kontakt mit der heißen Schweißnaht seine Form behalten würde, nicht erforderlich.
Wichtige Merkmale der Erfindung eines Fundamentrahmen oder einer Motorschwinge sind, dass eine erste Auflagefläche für einen Motor vorgesehen ist und eine zweite Auflagefläche für ein Getriebe vorgesehen ist, wobei die Auflageflächen von unbearbeiteten Halbzeugen gebildet werden, wobei vorzugsweise die erste Auflagefläche von einem ersten Distanzteil umfasst ist und die zweite Auflagefläche von einem zweiten Distanzteil umfasst ist, wobei beide Distanzteile aus unbearbeiteten Halbzeugen durch Ablängen hergestellt sind und beide Distanzteile mit einem oder über ein Profilrohr stoffschlüssig durch eine erfindungsgemäße Verbindung verbunden sind, wobei bei mindestens einem Distanzteil mindestens ein in einen durch angrenzende Oberflächen gebildeten Hohlraum eingelegtes Ausgleichselement, vorzugsweise eine Unterlegscheibe oder dergleichen Blechstück, oder ein leerer Hohlraum zwischen dem Distanzteil und dem Profilrohr angeordnet ist, wobei der Hohlraum von der stoffschlüssigen Verbindung zumindest teilweise nach außen, vorzugsweise zumindest abschnittsweise oder vollständig auf allen offenen Seiten des Hohlraums, abgeschlossen wird, wobei die Schweißnaht das Ausgleichselement nicht direkt berührt. Ein unbearbeitetes Halbzeug ist hierbei ein durch Walzen hergestelltes, quaderförmiges Stahlteil, dessen Oberflächen, insbesondere die als Auflageflächen vorgesehenen Oberflächen, nicht durch Schleifen oder Fräsen oder dergleichen spanende Verfahren nachbearbeitet und auf ein bestimmtes Maß gebracht sind. Insbesondere sind also die Seitenflächen, die an die beim Ablängen erzeugten Schnittflächen angrenzen, nach dem Walzen unbearbeitet. Von Vorteil ist dabei, dass eine Bearbeitung der Auflageflächen zur Einstellung eines benötigten Baumaßes, beispielsweise zwischen einer Getriebewelle und einer Motorwelle oder einer weiteren Getriebewelle, verzichtbar ist. Durch die Einsparung der Bearbeitung sind auf Aufspannen und Einrichten des Fundamentrahmens oder der Motorschwinge verzichtbar. Somit können teure, weil zeitintensive, Fertigungsschritte entfallen.
Bei einer vorteilhaften Ausgestaltung ist die erste Auflagefläche von einem ersten Distanzteil umfasst und die zweite Auflagefläche von einem zweiten Distanzteil, wobei beide Distanzteile aus unbearbeiteten Halbzeugen durch Ablängen hergestellt sind. Von Vorteil ist dabei, dass die Auflageflächen aus standardisierten Bauteilen, die zu Distanzteilen zusammengesetzt werden, hergestellt werden. Diese werden auf einfache Weise mit einem tragenden Teil des Fundamentrahmens oder der Motorschwinge, verbunden. Die Oberfläche der Halbzeuge, die durch Walzen von Flachstahl, insbesondere Präzisionsflachstahl, entsteht, ist ausreichend eben und glatt für die Montage von Motoren und Getriebegehäusen. Die spanende Bearbeitung, die üblicherweise erfolgt, dient nur zum Erreichen eines Baumaßes und kann durch Einsatz der erfindungsgemäßen Verbindung, wobei ein Distanzteil als erstes Teil und das Profilrohr als zweites Teil dient, entfallen.

Bei einer vorteilhaften Ausgestaltung sind Distanzteile mit einem Profilrohr stoffschlüssig verbunden, wobei bei mindestens einen Distanzteil mindestens ein Ausgleichselement oder ein Hohlraum zwischen dem Distanzteil und dem Profilrohr angeordnet ist, der von der stoffschlüssigen Verbindung zumindest teilweise nach außen abgeschlossen wird. Von Vorteil ist dabei, dass eine erfindungsgemäße Verbindung einsetzbar ist bei der Fertigung eine Fundamentrahmens oder einer Motorschwinge. Das Profilrohr vermittelt vorteilhaft zwischen den Distanzteilen, und durch die Ausbildung eines Abstandes zwischen mindestens einem Distanzteil und dem Profilrohr sind Baumaße jenseits der Stufungen der für die Distanzteile eingesetzten Halbzeuge erreichbar, ohne dass die Distanzteile aufwendig gefertigt werden müssen oder ohne die Endbearbeitung der Halbzeuge auf ein gewünschtes Maß.

Bei einer vorteilhaften Ausgestaltung umfasst das erste Distanzteil zwei Flachstahl-Halbzeuge, die zu einer T-Form zusammengesetzt, insbesondere stoffschlüssig verbunden, sind. Bei einer vorteilhaften Ausgestaltung umfasst das zweite Distanzteil vier Flachstahl-Halbzeuge, die zu einem Viereck zusammengesetzt, insbesondere stoffschlüssig verbunden, sind. Somit sind Alternativen bereitgestellt, wie aus standardisierten, genormt bemaßten Halbzeugen Distanzteile zusammengesetzt werden können, die sich erfindungsgemäß einsetzen lassen. Vorteil der Alternativen ist, dass ein zusätzliches Einrichten der Bauteile eines Distanzteils entfällt. Die Halbzeuge werden lediglich auf die gewünschte Länge geschnitten, anschließend aufeinander gelegt und miteinander verschweißt. Die Anforderungen an die Herstellungsgenauigkeit sind gering, da das entscheidende Baumaß, die Gesamtdicke oder Gesamthöhe, durch die eingesetzten Materialstärken bereits vorgegeben ist.

Bei einer vorteilhaften Ausgestaltung sind an den Seiten des Profilrohrs Befestigungswinkel angeordnet, deren jeweils einer Schenkel mit einer Seite des Profilrohrs stoffschlüssig verbunden ist und deren jeweils anderer Schenkel Mittel zur Befestigung des Fundamentrahmens auf einer Unterlage aufweist, insbesondere Bohrlöcher. Von Vorteil ist dabei, dass ein weiteres Baumaß, beispielsweise die Bauhöhe einer abtreibenden Welle oder die Bauhöhe einer Gehäuseoberkante, einstellbar ist mit standardisierten Einzelteilen. Durch die seitliche, flächige Befestigung sind die Befestigungswinkel vor dem Verschweißen variabel positionierbar. Die üblicherweise unter dem Profilrohr quer an der Unterseite eingesetzten Querbleche müssen zum Einrichten des gewünschten Maßes nach dem Befestigen bearbeitet werden. Diese Bearbeitung ist mit dem Ersatz der Querbleche durch die Befestigungswinkel einsparbar. Vorzugsweise sind unterhalb des Profilrohres entsprechende Distanzteile einsetzbar, die das gewünschte Maß einstellen und die nach Befestigen, beispielsweise Verschweißen, entfernt werden.
Wichtige Merkmale der Erfindung einer Getriebe-Motor-Einheit sind, dass ein Motor auf einer ersten Auflagefläche eines **erfindungsgemäßen** Fundamentrahmens oder einer **erfindungsgemäßen** Motorschwinge angeordnet ist und ein Getriebe auf einer zweiten Auflagefläche eines **erfindungsgemäßen** Fundamentrahmens oder einer **erfindungsgemäßen** Motorschwinge angeordnet ist, wobei zwischen Motor und erster Auflagefläche Distanzscheiben eingeführt sind, die eine Fertigungstoleranz des Motors ausgleichen.
Wichtige Merkmale der Erfindung eines Verfahren zur Ausrichtung einer ersten Auflagefläche relativ zu einer zweiten Auflagefläche, wobei durch die Ausrichtung vorzugsweise eine die erste Auflagefläche umfassende Ebene parallel zu einer die zweite Auflagefläche umfassende Ebene angeordnet wird und die Ebenen einen vorgegebenen Ebenenabstand aufweisen, sind, dass in einem ersten Schritt ein erstes Distanzteil mit einem Referenzteil verbunden ist, in einem zweiten Schritt ein zweites Distanzteil in einem Abstand zu dem Referenzteil angeordnet wird, in einem dritten Schritt das zweite Distanzteil mit dem Referenzteil stoffschlüssig verbunden wird, wobei die Verbindung den im zweiten Schritt eingestellten Abstand zumindest teilweise ausfüllt, insbesondere wobei im zweiten Schritt zur Einstellung des Abstands ein Ausgleichselement, vorzugsweise eine Unterlegscheibe oder dergleichen Blechstück, zwischen zweitem Distanzteil und Referenzteil angeordnet wird, die stoffschlüssige Verbindung im dritten Schritt durch mindestens eine Schweißnaht hergestellt wird und die Schweißnaht nicht das zweite Distanzteil mit dem Ausgleichselement und nicht das Referenzteil mit dem Ausgleichselement verbindet und/oder die Schweißnaht nicht das Ausgleichselement direkt berührt. Gemäß der Erfindung ist die erste Auflagefläche vom ersten Distanzteil umfasst und die zweite Auflagefläche vom zweiten Distanzteil. Bei einer vorteilhaften Ausgestaltung ist die erste Auflagefläche vom zweiten Distanzteil umfasst und die zweite Auflagefläche vom ersten Distanzteil. Somit sind je nach gewünschtem Baumaß, das insbesondere eine vorzeichenbehaftete Größe sein kann, jeweils die erste oder die zweite Auflagefläche mit dem zweiten Distanzteil anhebbar.
Bei einer vorteilhaften Ausgestaltung wird durch die Ausrichtung eine die erste Auflagefläche umfassende Ebene parallel zu einer die zweite Auflagefläche umfassende Ebene angeordnet, wobei die Ebenen einen vorgegebenen Ebenenabstand aufweisen. Von Vorteil ist dabei, dass besonders einfach gestaltete Ausgleichselemente einsetzbar sind, die insbesondere planparallele Oberflächen aufweisen. Es ist somit nur ein Ausgleich in einer Raumrichtung oder Dimension notwendig. Diese Ausrichtung ist besonders vorteilhaft einsetzbar zur relativen Ausrichtung eines Motors und eines Getriebes.
Bei einer vorteilhaften Ausgestaltung wird im zweiten Schritt zur Einstellung des Abstands ein Ausgleichselement zwischen zweitem Distanzteil und Referenzteil angeordnet. Vorteilhaft sind Distanzbleche vorgegebener Dicke oder Unterlegscheiben oder sonstige kostengünstige Teile einsetzbar. Von Vorteil ist dabei, dass die Verbindung normal zu den beabstandeten Flächen stärker belastbar ist, als es der Fall wäre, wenn der Abstand durch einen Hohlraum hergestellt würde. In Weiterbildungen werden mehrere Ausgleichselement nebeneinander gelegt, um eine ebene Ausrichtung bereitzustellen. In Weiterbildungen werden mehrere Ausgleichselemente übereinander gestapelt, um eine größer Variabilität des Gesamtmaßes oder ein größeres Gesamtmaß zu erreichen. Die Ausgleichselemente werden vorzugsweise in feinen Abstufungen vorgehalten und nach Bedarf aufeinander gestapelt. Somit sind Positioniergenauigkeiten von einem Zehntel Millimeter oder weniger erreichbar.
Bei einer vorteilhaften Ausgestaltung umgibt die im dritten Schritt hergestellte stoffschlüssige Verbindung das Ausgleichselement zumindest teilweise. Die Verbindung kann das Ausgleichselement punktuell oder abschnittsweise derart umgeben, dass es nicht herausfallen kann und somit fixiert ist. Gemäß der Erfindung wird die stoffschlüssige Verbindung im dritten Schritt durch mindestens eine Schweißnaht hergestellt. Von Vorteil ist dabei, dass kein direkter Kontakt zwischen den verbundenen Teilen notwendig ist, sondern dass die Schweißnaht den durch das Ausgleichselement eingestellten Abstand überbrücken kann. Somit müssen nicht das erste Teil mit dem Ausgleichselement und dieses mit dem zweiten Teil verbunden werden, sondern die Verbindung erfolgt in einem technologisch einfachen Arbeitsgang.

Bei einer vorteilhaften Ausgestaltung wird das Ausgleichselement zwischen Referenzteil und zweitem Distanzteil eingeklemmt, insbesondere nach Erkalten der Schweißnaht. Von Vorteil ist dabei, dass das Ausgleichselement oder die Ausgleichselemente einen Widerstand darstellen gegen eine Verformung der Verbindungsstelle beim Abkühlen der Schweißnaht.

Bei einer vorteilhaften Ausgestaltung umfasst das Referenzteil ein Profilrohr eines Fundamentrahmens oder eine Motorschwinge. Von Vorteil ist dabei, dass ein tragendes Teil als Referenz zum Einstellen des gewünschten Baumaßes verwendbar ist.

Bei einer vorteilhaften Ausgestaltung wird im zweiten Schritt eine Ausgleichsvorrichtung mit dem zweiten Distanzteil und dem Referenzteil verbunden zur Einstellung des Abstands. Somit ist der gewünschte Abstand durch entsprechende Auswahl eines Ausgleichselements gewünschter Dicke oder Materialstärke vorgebbar. Das zweite Distanzteil und das Referenzteil sind nach Einlegen des Ausgleichselements beispielsweise durch Schraubzwingen fixierbar zur besonders einfachen Durchführung des Verbindungsschrittes. Die Schraubzwingen sind nach Herstellen der stoffschlüssigen Verbindung wieder entfernbar.

Bei einer vorteilhaften Ausgestaltung wird zur Einstellung des Abstands mit einer Zielvorrichtung an der Ausgleichsvorrichtung das erste Distanzteil, insbesondere eine Markierung auf dem ersten Distanzteil, angepeilt. Somit sind die Materialkosten für das Ausgleichsteil einsparbar. Wird eine Baureihe gefertigt mit standardisierten Baumaßen, so ist ein Satz von Lehren einsetzbar, dessen Lehren jeweils einen gewünschten Abstand und somit ein gewünschtes Baumaß einstellen.

Bei einer vorteilhaften Ausgestaltung ist die erste Auflagefläche in etwa konzentrisch zu der zweiten Auflagefläche angeordnet, und es wird in Schritt ii) ein Abstand in mindestens verschiedenen zwei Richtungen eingestellt. Somit ist die Erfindung beispielsweise bei der Fertigung von Getriebe-Motor-Einheiten einsetzbar, bei denen das Getriebe über eine Kupplung an einen Motor angeschlossen ist, wobei das Getriebegehäuse mit dem Motorgehäuse über ein Kupplungsgehäuse verbunden ist. Ein Fundamentrahmen ist somit verzichtbar, und das Getriebe stützt sich am Motor über das Kupplungsgehäuse ab. Das Kupplungsgehäuse weist zur schnellen Demontage eine ringförmige Anschlussfläche auf, in die eine passende Ringfläche des Motorgehäuses konzentrisch eingesetzt wird. Die Ringfläche des Kupplungsgehäuses ist hierbei mit einem erfindungsgemäßen Verfahren mit dem übrigen Kupplungsgehäuse derart verbunden, dass bei der Fertigung der Getriebe-Motor-Einheit mit Kupplungsgehäuse die Ringfläche in mindestens zwei verschiedenen Richtungen, hier beispielsweise zwei senkrecht aufeinander und auf der Motorachse stehenden Richtungen und/oder die Axialrichtung, erfindungsgemäß vor dem Schweißen justierbar ist.

Wichtige Merkmale der Erfindung eines Verfahrens zur Herstellung einer Getriebe-Motor-Einheit sind, dass ein erfindungsgemäßer Fundamentrahmen oder eine erfindungsgemäße Motorschwinge mit einer ersten Auflagefläche und einer zweiten Auflagefläche hergestellt wird, und es wird auf der ersten Auflagefläche ein Motor und auf der zweiten Auflagefläche ein Getriebe montiert, wobei durch das Einstellen des Ebenenabstandes die Motorwelle zur eintreibenden Welle des Getriebes koaxial ausgerichtet wird. Von Vorteil ist dabei, dass die Herstellungskosten der Getriebe-Motor-Einheit reduziert sind, da die Vorteile der Erfindung genutzt werden.

Bei einer vorteilhaften Ausgestaltung werden bei Montage des Motors auf der ersten Auflagefläche Distanzscheiben zur Feinjustage zwischen Motor und Auflagefläche eingeführt. Von Vorteil ist dabei, dass Fertigungstoleranzen, die am Getriebe oder am Motor bestehen, insbesondere hinsichtlich der Bauhöhe von Wellen über einem Gehäusefuß, bei Montage ausgleichbar sind. Die eingesetzten Distanzscheiben weisen daher eine geringe Dicke auf als die typische Größe der Fertigungstoleranzen. Die Distanzscheiben sind daher beträchtlich dünner als beispielsweise die Ausgleichselemente, deren Dicke sich an den Normstufungen der eingesetzten Flachstahl-Bauteile orientiert. Alternativ sind die Distanzscheiben zwischen Getriebe und der Auflagefläche des Getriebes eingelegt.

Wichtige Merkmale der Erfindung einer Baureihe von Getriebe-Motor-Einheiten sind, dass in den Varianten der Baureihe eine erfindungsgemäße Getriebe-Motor-Einheit eingesetzt wird, die nach einem erfindungsgemäßen Verfahren hergestellt ist, wobei jede Variante der Baureihe durch eine Differenz der Bauhöhe der Motorwelle über dem Statorfuß zu der Bauhöhe der eintreibenden Welle über dem Getriebefuß gekennzeichnet ist und die Differenz durch Ausgleichselemente zwischen einem Distanzteil und dem Fundamentrahmen oder der Motorschwinge eingestellt ist. Die Distanzteile sind aus gewalztem, vorzugsweise nicht weiter bearbeiteten, abgelängten, also insbesondere nicht durch Schleifen, Fräsen oder dergleichen spanende Verfahren auf eine gewünschte Dicke oder Stärke gebrachte, Flachstahl-Halbzeugen hergestellt, und bei mindestens zwei Varianten der Baureihe, für welche die Differenz der Bauhöhen unterschiedlich ist, umfassen die jeweils ersten und/oder die jeweils zweiten Distanzteile Flachstahl-Halbzeuge gleicher Materialstärke.

Bei einer vorteilhaften Ausgestaltung umfassen Varianten der Baureihe einen Fundamentrahmen mit einem Profilrohr, wobei an mindestens einer Seitenfläche Befestigungswinkel vorgesehen sind. Jede dieser Varianten ist durch eine Bauhöhe der abtreibenden Welle des Getriebes über der Fußfläche der Befestigungswinkel gekennzeichnet ist. Mindestens zwei Varianten der Baureihe mit unterschiedlichen Bauhöhen der abtreibenden Welle weisen erfindungsgemäß identische Befestigungswinkel auf, die zur Einstellung der unterschiedlichen Bauhöhe in unterschiedlichen Positionen auf der Seitenfläche mit dem Profilrohr stoffschlüssig verbunden sind. Vorteilhaft sind die Befestigungswinkel paarweise jeweils zu beiden Seiten des Profilsrohrs angeschweißt. Somit wird die durch das Schweißen jedes Befestigungswinkels bewirkte Verformung des Profilrohrs gerade aufgehoben. Somit sind Fertigungsfehler, insbesondere Abweichungen von den vorgegebenen Maßen, vermieden. Eine Nachbearbeitung kann entfallen. Somit sind die Fertigungskosten reduziert.

Alternativ ist ein Querblech zur Fußbefestigung einsetzbar, das über eine erfindungsgemäße Verbindung mit dem Profilrohr verbunden ist.

Eine erfindungsgemäße Verbindung eines ersten Teils mit einem zweiten Teil ist auch bei weiteren Vorrichtungen vorteilhaft einsetzbar. Beispielsweise ist ein Motor mit einem Getriebe über einen Motoradapter verbindbar, der zum Getriebe eine erste Passform-Verbindung und zum Motor eine zweite Passform-Verbindung aufweist. Der Adapter ist mit der Erfindung als standardisiertes Gehäuse fertigbar, wobei mindestens eine Passform-Verbindung durch nicht weiter oberflächenbearbeitete Halbzeuge bereitgestellt ist, die über eine erfindungsgemäße Verbindung am Adaptergehäuse befestigt sind. Somit ist auch in diesem Fall aus standardisierten Teilen ohne aufwendige Oberflächennachbearbeitung eine Baureihe fertigbar.
Das erfindungsgemäße Verfahren ist auch vorteilhaft in Situationen einsetzbar, bei denen die Ausrichtung in zwei oder mehr voneinander unabhängigen Richtungen erfolgt. Es werden dann für jede dieser Richtungen jeweils Ausgleichselemente zu einem Referenzteil eingefügt, die anschließend von dem Material der stoffschlüssigen Verbindung, beispielsweise den Schweißnähten, umgeben.
Bei weiteren vorteilhaften Ausgestaltungen wird statt Stahl ein anderes Material für erstes und zweites Distanzteil eingesetzt, das unter Einsatz von Schweißzusatzwerkstoffen geschweißt wird. Hierbei überbrücken und umgeben zumindest teilweise die Schweißzusatzstoffe den Abstand oder den Hohlraum zwischen den Distanzteilen. Beispielsweise sind die Distanzteile aus Aluminium, vorzugsweise in Stranggusstechnik, gefertigt, und es wird ein Schweißzusatzwerkstoff nach den eingesetzten AluminiumLegierungen eingesetzt.

Die Erfindung wird nun anhand von Abbildungen näher erläutert:
Es zeigt
- Figur 1 zeigt eine montierte Getriebe-Motor-Einheit mit einem erfindungsgemäßen Fundamentrahmen,
- Figur 2 zeigt den Fundamentrahmen aus Figur 1 mit Befestigungsmitteln für Motor und Getriebe,
- Figur 3 zeigt den Fundamentrahmen aus Figur 2 in einer Seitenansicht,
- Figur 4 zeigt eine Detailansicht des Fundamentrahmens aus Figur 3,
- Figur 5a zeigt eine Prinzipskizze eines Fundamentrahmens nach dem Stand der Technik,
- Figur 5b zeigt eine Prinzipskizze eines erfindungsgemäßen Fundamentrahmens,
- Figur 5c zeigt eine Prinzipskizze einer Variation des erfindungsgemäßen Fundamentrahmens aus Figur 5b,
- Figur 6a zeigt eine Prinzipskizze eines Fundamentrahmens mit Bodenbefestigungsmitteln nach dem Stand der Technik,
- Figur 6b zeigt eine Prinzipskizze eines weiteres Fundamentrahmens mit Bodenbefestigungsmitteln nach dem Stand der Technik,
- Figur 6c zeigt eine Prinzipskizze eines erfindungsgemäßen Fundamentrahmens mit Ausgleichselement und Bodenbefestigungsmitteln,
- Figur 7 zeigt eine Prinzipskizze einer alternativen Fertigung eines erfindungsgemäßen Fundamentrahmens.

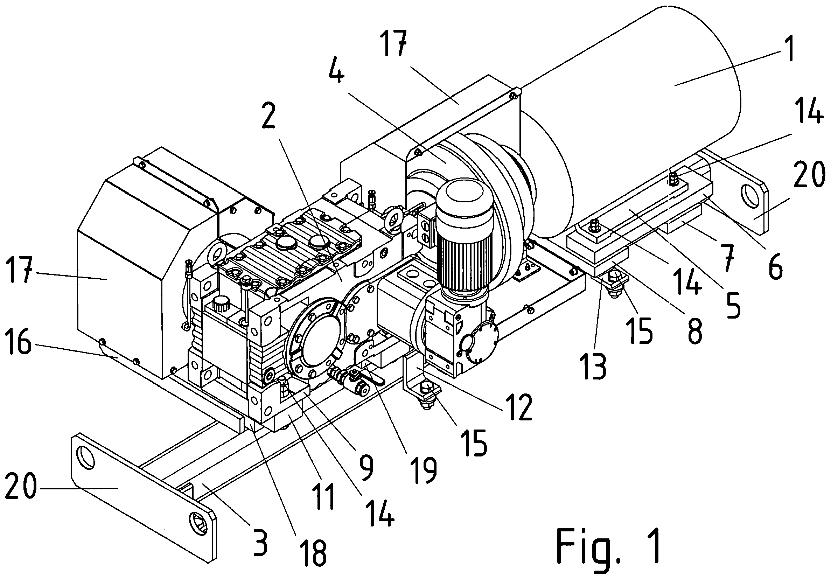

Figur 1 zeigt einen Motor 1 und ein Getriebe 2, die auf einem Fundamentrahmen 3 montiert sind. Der Motor 1 ist über eine Kupplung 4 an die eintreibende Welle des Getriebes gekoppelt. Die Kupplung 4 wird durch eine Haube 17 abgedeckt.

Die Statorfüße 5 des Motors 1 ruhen zu beiden Seiten des Motors 1 auf jeweils einer Motorauflage 6. Die Motorauflagen 6 sind auf einem ersten Querblech 7 und einem zweiten Querblech 8 angeordnet und mit diesen verschweißt. Die Statorfüße 5 sind mittels Schrauben 14 an den Motorauflagen 5 befestigt. Die Schrauben 14 verbinden jeweils eine Motorauflage 5 mit einem Querblech 7 oder 8.

Am Getriebe 2 sind Getriebefüße 9 ausgebildet, die mittels Schrauben auf Getriebeauflagen 10 und 11 befestigt sind. Dabei ist eine erste Getriebeauflage 10 mit einem ersten Distanzblock 19 verbunden und eine zweite Getriebeauflage 11 mit einem zweiten Distanzblock 18. Die Verbindungen sind jeweils geschweißt.

Der Fundamentrahmen 3 umfasst ein Profilrohr, das an seinen beiden Enden durch ein Kopfblech 20 abgeschlossen ist. Ösen im Kopfblech 20 dienen zum Transport der Getriebe-Motor-Einheit.

Die Distanzblöcke 18, 19 sind ihrerseits auf der nach oben orientierten Seite des Profilrohrs angeschweißt.

Am Profilrohr sind seitlich auf beiden Seiten je drei winkelförmige Fußbefestigungen 12, 13 angebracht, deren einer Schenkel mit dem Profilrohr verbunden ist, während der jeweils andere Schenkel in einer gemeinsamen Ebene liegt, die die Montagefläche des Fundamentrahmens an einem Gestell oder auf dem Boden beschreibt. Die jeweils einen Schenkel sind mit dem Profilrohr verschweißt, die jeweils anderen Schenkel weisen Bohrlöcher auf, durch die Schrauben 15 gesteckt sind zur Befestigung auf einer Unterlage.

Auf Haubenauflagen 16 ist eine weitere Haube 17 angeordnet, die eine weitere Kupplung abdeckt, die mit der abtreibenden Welle des Getriebes verbunden ist.

Bei weiteren Ausführungsbeispielen weist das Profilrohr einen anderen Querschnitt auf. Beispielsweise umfasst das Profilrohr zwei Stangen mit U-Profil, deren jeweilige Öffnungen voneinander weg zeigen.

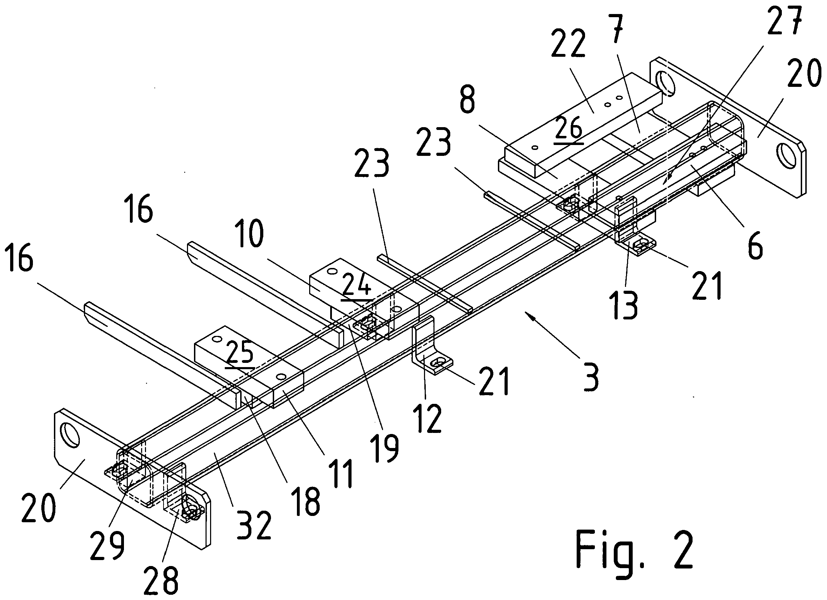

Figur 2 zeigt den Fundamentrahmen 3 aus Figur 1 ohne Getriebe-Motor-Einheit.

Auf dem Profilrohr 32 sind Distanzblöcke 18 und 19 und Querbleche 7 und 8 aufgesetzt und mit dem Profilrohr 32 verschweißt. Das Profilrohr 32 ist als viereckiges Hohlprofil ausgebildet. Beide Enden sind mit einem Kopfblech 20 verschlossen, um das Eindringen von Schmutz zu verhindern. Die Kopfbleche 20 weisen außerdem Bohrungen auf, an denen der Fundamentrahmen 3 als Ganzes, also auch mit montierter Getriebe-Motor-Einheit, transportiert werden kann.

Auf jedem Distanzblock 18, 19 ist jeweils eine Getriebeauflage 10, 11 angeordnet, die mit dem jeweiligen Distanzblock 18, 19 verschweißt ist.

Auf jedem Querblech 7, 8 ist jeweils eine Motorauflage 6, 22 angeordnet, die mit dem jeweiligen Querblech 7, 8 verschweißt oder mittels einer Schraube 14 verbunden ist.

Jede Getriebeauflage 10, 11 bildet jeweils eine Auflagefläche 24, 25 aus, auf der das Getriebe der Getriebe-Motor-Einheit montiert wird. In jeder Getriebeauflage 10, 11 sind Bohrungen vorgesehen zu Aufnahme der Schrauben 14 zur Befestigung des Getriebes.

Jede Motorauflage 22, 6 bildet jeweils eine Auflagefläche 26, 27 aus, auf welcher der Motor der Getriebe-Motor-Einheit montiert wird. In jeder Motorauflage sind Bohrungen vorgesehen zu Aufnahme der Schrauben 14 zur Befestigung des Motors. Die Schrauben 14 dienen vorzugsweise zur Verbindung von Statorfuß 5, Motorauflage 6, 22 und Querblech 7, 8.

Motorauflagen 6, 22, Querbleche 7, 8, Getriebeauflagen 10, 11 und Distanzblöcke 18, 19 sind aus unbearbeiteten Halbzeugen, vorzugsweise kalt- oder warmgewalztem Flachstahl oder Präzisionsflachstahl, ohne weitere Oberflächenbearbeitung hergestellt. Insbesondere weisen die Auflageflächen 24, 25, 26, 27 keine Fräs- oder Schleifspuren auf.

Die Auflageflächen 26, 27 der Motorauflage 6, 22 sind bezüglich der Auflageflächen 24, 25 der Getriebeauflage 10, 11 um einen festgelegten Betrag versetzt angeordnet. Dieser Betrag entspricht der Differenz zwischen der Höhe der eintreibenden Welle des Getriebes über der Unterseite des Getriebefußes 9 und der Höhe der Motorwelle über der Unterseite des Statorfußes 5. Als Referenz zur Umsetzung dieser Differenz dient jeweils die Oberseite des Profilrohrs 32. Somit ist erreicht, dass die Motorwelle mit der eintreibenden Welle des Getriebes bis auf Fertigungstoleranzen, insbesondere des Motors, fluchtet.

An den Seitenflächen des Profilrohrs 32 sind jeweils paarweise gegenüber Fußbefestigungen 12, 13, 28, 29 angeschweißt zur Montage des Fundamentrahmens 3 auf einer Montagefläche oder Montageplatte.

Die Fußbefestigungen 12, 13, 28, 29 sind weiter mit Langlochbohrungen 21 versehen, durch die Schrauben 15 gesteckt werden zur Befestigung des Fundamentrahmens.

Auf der Oberseite des Profilrohrs 32 sind Haubenauflagen 16, 23 angeschweißt, die Hauben 17 aufnehmen. Diese Hauben 17 dienen als Kupplungsschutzhauben.

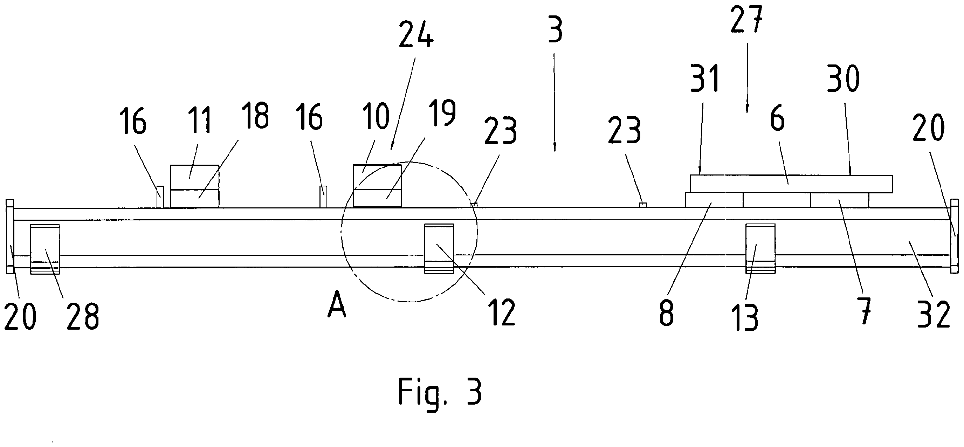

Figur 3 zeigt den Fundamentrahmen 3 aus Figur 2 in Seitenansicht. Die Länge des Fundamentrahmens 3 beträgt bei den Varianten einer Baureihe von Fundamentrahmen zwischen 1 m und 5 m, der Querschnitt des Profilrohrs 32 misst zwischen 120 mm und 400 mm.

Das Querblech 7 ist direkt auf die Oberseite des Profilsrohres 32 aufgesetzt und mit diesem verschweißt, ebenso das Querblech 8. Auf die Querbleche 7, 8 sind längs zum Profilrohr 32 Motorauflagen 6, 22 direkt aufgesetzt und mit den Querblechen verschweißt. Hierdurch ist ein von oben viereckiger Rahmen auf dem Profilrohr 32 gebildet. Die Auflagefläche 27 umfasst einen ersten Auflagebereich 30 und einen zweiten Auflagebereich 31. Die in der Figur 3 verdeckte Auflagefläche 26 umfasst ebenso zwei Auflagebereiche. Durch diese Auflagebereiche ist ein Viereck gebildet, das die Ausrichtung des Rahmens aus Querblechen 7, 8 und Motorauflagen 6, 22 beschreibt.

Die Auflagebereiche sind die Bereiche, in denen die Statorfüße 5 des Motors 1 aufgesetzt werden. Somit ist die Lage des Motors 1 durch die Auflagebereiche vorgegeben. Zu Feinjustierung, etwa zum Ausgleich von Fertigungstoleranzen des Motors und des Rahmens, werden zwischen Statorfuß 5 und Auflagebereich 30, 31 dünne Metallscheiben gelegt, bevor der Statorfuß 5 mit der Motorauflage 6 verschraubt wird.

Durch die Dicke der Motorauflagen 6, 22 und der Querbleche 7, 8 ist der Abstand der Auflagebereiche 30, 31 von der Oberseite des Profilrohrs 32 festgelegt, da die Motorauflagen 6, 22, insbesondere die Auflagenbereiche 30, 31 nach dem Verschweißen nicht mehr bearbeitet werden.

Der Distanzblock 19 ist nicht direkt auf die Oberseite des Profilrohrs 32 aufgesetzt, sondern es ist eine Beabstandung der Unterseite des Distanzblocks 19 von der Oberseite des Profilsrohrs 32 vorgesehen, die beispielsweise durch ein Ausgleichselement gebildet wird. Auf den Distanzblock 19 ist wiederum eine Getriebeauflage 10 direkt aufgesetzt und mit diesem verschweißt. Die Getriebeauflage 10 weist eine Auflagefläche 24 auf. Diese Auflagefläche 24 weist gegenüber der Oberseite des Profilrohrs 32 einen Abstand auf, der vorgegeben ist durch die Materialdicke des Distanzblocks 19 und der Getriebeauflage 10, die beide Flachstahl mit einer Normdicke gefertigt sind, sowie der Dicke der Ausgleichselemente definiert ist.

Distanzblock 19 und Getriebeauflage 10 bilden somit eine T-förmige Montagelinie für das Getriebe 2.

Der Distanzblock 18 und die Getriebeauflage 11 sind analog zur dem Distanzblock 19 und der Getriebeauflage 10 angeordnet.

Die Getriebeauflagen 10 und 11 bilden somit ein Viereck, das die räumliche Lage des Getriebes 2 festlegt. Durch die T-förmige Ausbildung der Einheit von Distanzblock 18, 19 und Getriebeauflagen 10, 11 ist dieses Viereck bereits quer zum Profilrohr 32 ausgerichtet.

Somit ist das Getriebe 2 in einer Höhe über der Oberseite des Profilrohrs 32 montierbar, die durch die Wahl der Ausgleichselemente variierbar ist. Diese Höhe ist insbesondere in Schritten variierbar, die kleiner sind als die Stufungen von handelsüblichen Flachstahl-Halbzeugen.

Durch die Höhe des Getriebes 2 über der Oberseite des Profilrohrs 32 und die Höhe des Motors 1 über der Oberseite des Profilrohrs 32 ist die Höhendifferenz zwischen Motor 1 und Getriebe 2 einstellbar. Für jede vorgesehene Getriebe-Motor-Kombination ist somit eine räumliche Lage von Motor 1 und Getriebe 2 wählbar, bei der diejenigen Wellen, die durch die Kupplung 4 zu verbinden sind, fluchtend, also parallel und koaxial, zu einander angeordnet sind. Die Oberseite des Profilsrohrs 32 dient somit als Referenzfläche, bezüglich derer die Auflageflächen 24, 25, 26, 27 ausgereichtet sind.

Für die Einbindung der Getriebe-Motor-Einheit in eine Anlage ist die abtreibende Welle des Getriebes 2 mit einer weiteren Kupplung an ein bewegliches Teil der Anlage anzuschließen. Hierzu muss ein Abstand der abtreibenden Welle von einer Montagefläche eingehalten werden, der vom Anlagenbauer vorgegeben ist.

Dieser Abstand ist bei Fertigung des Fundamentrahmens 3 dadurch eingestellt, dass die Fußbefestigungen 12, 13, 28 entlang der Seitenflächen des Profilsrohrs 32 entsprechend verschoben und anschließend festgeschweißt werden.

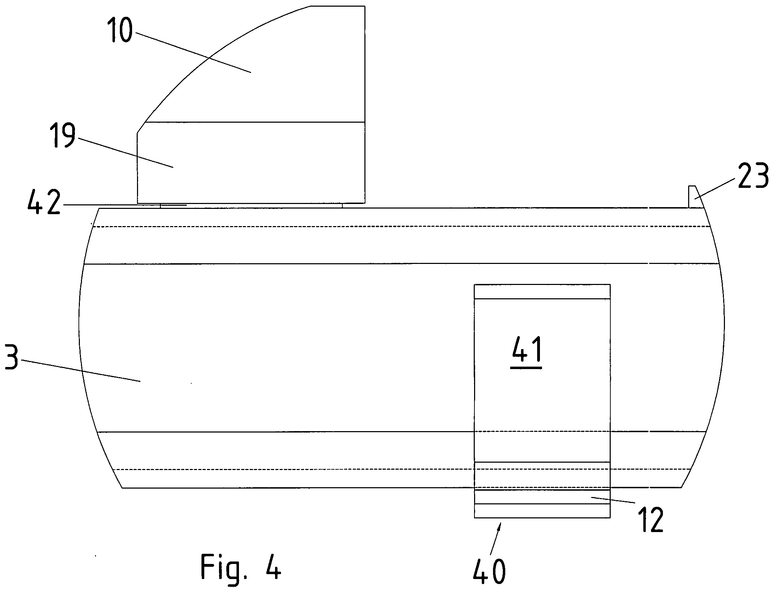

Figur 4 zeigt eine Detailansicht aus Figur 3. Zwischen Profilrohr 32 und Distanzblock 19 ist ein Ausgleichselement 42 vorgesehen. Dieses Ausgleichselement 42 ist durch ein Blech oder mehrere aufeinander geschichtete Bleche oder Unterlegscheiben oder dergleichen gebildet.

Der Distanzblock 19 ist direkt über eine nicht dargestellte Schweißnaht mit dem Profilrohr 32 verbunden. Das Ausgleichselement 42 überdeckt einen Großteil der Fläche zwischen dem Distanzblock 19 und dem Profilrohr 32, und die Schweißnaht wird immer beidseits des Ausgleichselements 42 angebracht. Es werden also wahlweise auf zwei gegenüberliegenden Seiten oder auf allen vier Seiten Schweißnähte angebracht. Hierdurch wird ein Verkippen und/oder Verziehen des Distanzblocks 19 relativ zum Profilrohr 32 beim Erkalten der Schweißnähte vermieden.

Vorzugsweise wird der Fundamentrahmen 3 vor dem Schweißen in eine Spannvorrichtung eingespannt, wobei die Enden des Fundamentrahmens von dem Schweißbereich weg gebogen sind. Somit wird einer Verformung des Profilrohres 32 beim Schweißen, welche die Enden des Profilrohres 32 zur Seite des Schweißbereichs, also nach oben in der Figur 3, verbiegen würde, entgegengewirkt.

Distanzblock 18 weist eine gleichartige Verbindungstechnik mit Profilrohr 32 auf.

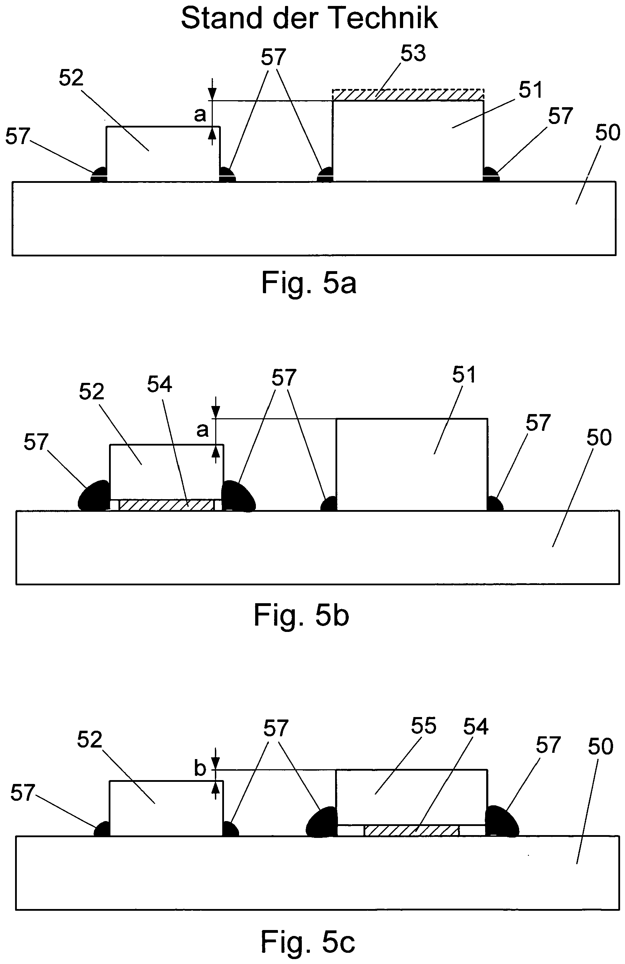

Figur 5a zeigt eine Prinzipskizze eines Fertigungsverfahrens für einen Fundamentrahmen nach dem Stand der Technik. Der Fundamentrahmen ist für eine Getriebe-Motor-Einheit vorgesehen.

Auf ein Profilrohr 50 sind ein erstes Distanzteil 51 und ein zweites Distanzteil 52 gesetzt. Schweißnähte 57 stellen eine stoffschlüssige Verbindung zwischen Profilrohr 50 und Distanzteilen 51, 52 her.

Die Distanzteile 51, 52 sind aus handelsüblichen Walzstahl-Halbzeugen durch Ablängen gefertigt. Somit weisen die Oberseiten der Distanzteile 51 und 52 eine festgelegte Höhendifferenz auf, wobei Höhe die Höhe über dem Profilrohr 50 meint.

Für eine gewünschte Kombination eines Getriebes mit einem Motor, wobei der Motor auf dem ersten Distanzteil 51 montiert werden soll und das Getriebe auf dem zweiten Distanzteil 52, wird eine Höhendifferenz a benötigt, die sich nicht durch entsprechende Wahl der Halbzeuge für die Distanzteile 51, 52 einstellen lässt, da die Halbzeuge nur in festgelegten Dicken erhältlich sind.

Daher werden die Materialstärken für die Distanzteile 51, 52 derart ausgewählt, dass die Höhendifferenz größer als die benötigte ist, und es wird nach Verschweißen der Distanzteile 51, 52 das zweite Distanzteil 52 bearbeitet, bis das benötigte Maß a erreicht ist. Durch die Bearbeitung wird somit ein Abfall 53 vom Distanzteil 52 entfernt.

Alternativ Daher werden die Materialstärken für die Distanzteile 51, 52 derart ausgewählt, dass die Höhendifferenz kleiner als die benötigte ist, und es wird nach Verschweißen der Distanzteile 51, 52 das erste Distanzteil 51 bearbeitet, bis das benötigte Maß a erreicht ist. In jedem Fall ist eine Bearbeitung, etwa durch Fräsen oder Schleifen, nötig, und es entsteht Abfall.

Figur 5b zeigt ein erfindungsgemäßes Fertigungsverfahren. Ein erstes Distanzteil 51 wird direkt auf ein Profilrohr 50 aufgesetzt und mit diesem verschweißt. Zur Realisierung des Maßes a aus Figur 5a wird zwischen einem zweiten Distanzteil 52 und dem Profilrohr 50 ein Ausgleichselement 54 gelegt. Anschließend wird das zweite Distanzteil 52 mit dem Profilrohr 50 verbunden, vorzugsweise durch Schweißnähte 57.

Die Schweißnähte 57 überbrücken somit den Abstand, den das Ausgleichselement 54 zwischen Profilrohr 50 und zweitem Distanzteil 52 herstellt.

Alternativ wird, wie in Figur 5c gezeigt, das zweite Distanzteil 52 direkt auf das Profilrohr 50 aufgesetzt, während das erste Distanzteil 51 durch ein Ausgleichselement 54 angehoben wird. Diese Variante ist einsetzbar, wenn für eine gewünschte Getriebe-Motor-Einheit ein Maß b benötigt wird, dass klein ist gegenüber der Materialstärken-Stufung der Halbzeuge.

Beträgt die Materialstärke des Ausgleichselements 54 ein Drittel der Stufung der Halbzeuge, so ist eine Stufung für die Höhendifferenzen für die Getriebe-Motor-Einheit bereitgestellt, die ein Drittel der Stufung der Halbzeuge beträgt: In einer ersten Variante werden Halbzeuge ohne Ausgleichselemente verwendet, in einer zweiten und einer dritten Variante werden Ausgleichselemente gemäß Figur 5b und 5c eingesetzt.

Eine Bearbeitung der Halbzeuge nach Anbringen der Schweißnähte 57 zur Einstellung der Höhendifferenz a wie in Figur 5a kann entfallen.

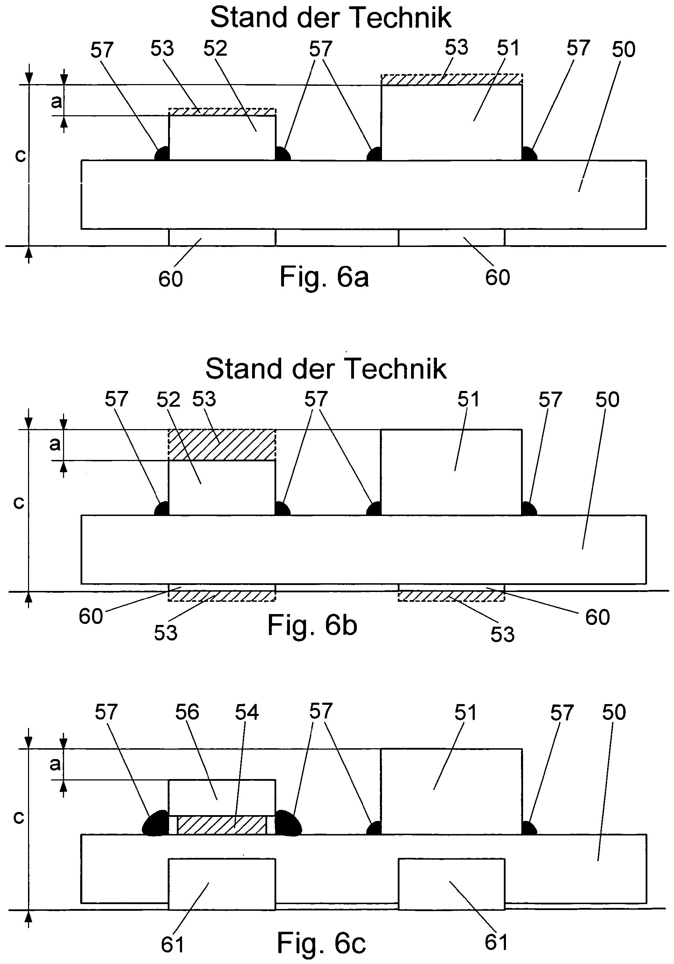

Figur 6a zeigt eine Prinzipskizze eines Fertigungsverfahrens nach dem Stand der Technik zur Einstellung der Höhe der Abtriebswelle eines Getriebes über einer Montageplatte.

Ein erstes Distanzteil 51 und ein zweites Distanzteil 52 sind direkt auf ein Profilrohr 50 aufgesetzt und durch Schweißnähte 57 befestigt.

An der Unterseite des Profilsrohrs 50 sind Fußblöcke 60 befestigt. Diese Fußblöcke sind aus Flachstahl gefertigt und als Riegel quer zum Profilrohr 50 ausgerichtet. Hierdurch ist eine Befestigung beidseits des Profilsrohrs 50 auf einer Montageplatte ermöglicht.

Ein Maß a beschreibt die Höhendifferenz zwischen der Montagehöhe für das Getriebe und der Montagehöhe für den Motor der Getriebe-Motor-Einheit. Ein Maß c beschreibt die Montagehöhe des Motors über der Montageplatte.

Zur Einstellung der Maße a und c werden die Distanzblöcke 51, 52 an den Oberseiten bearbeitet, indem wie in der Figur 5a gezeigt Abfall 53 vom Material weggenommen wird.

Alternativ wird die Oberseite eines Distanzblocks 52 bearbeitet und die Unterseiten der Fußblöcke 60, wie in Figur 6b gezeigt.

In jedem Fall fällt durch die Endbearbeitung, die beispielsweise durch Schleifen und/oder Fräsen erfolgen kann, Abfall 53 an.

Figur 6c zeigt die Prinzipskizze eines erfindungsgemäßen Fertigungsverfahren für einen Fundamentrahmen.

Ein erstes Distanzteil 51 und ein zweites Distanzteil 56 werden mit einem Ausgleichselement 54 nach dem Fertigungsverfahren gemäß Figur 5b oder 5c so eingerichtet, dass das Maß a eingestellt ist.

An den Seitenflächen des Profilrohrs 50 sind beidseitig paarweise Fußwinkel 61 angebracht. Die Montageposition der Fußwinkel 61 auf dem Profilrohr 50 wird so gewählt, dass das Maß c eingehalten ist.

In den Figuren 5a bis 6c bezieht sich erstes Distanzteil auf den Montageansatz für einen Motor und zweites Distanzteil auf den Montageansatz für ein Getriebe. Insbesondere ist die durch das erste Distanzteil bereitgestellte Montagehöhe größer als die durch das zweite Distanzteil bereitgestellte Montagehöhe. In weiteren Ausführungsbeispielen sind diesen Rollen vertauscht.

In weiteren Ausführungsbeispielen ist/sind die Anzahl der Distanzteile und/oder die Anzahl der Fußwinkel variiert. Die Distanzteile können auch aus mehreren Einzelteilen zusammengesetzt werden. Beispielsweise wird in Figur 3 das erste Distanzteil aus den Querblechen 7 und 8 und den Motorauflagen 6 und 22 gebildet, während das zweite Distanzteil aus dem Distanzblock 19 und der Getriebeauflage 10 gebildet wird. Ein drittes Distanzteil wird aus dem Distanzblock 18 und der Getriebeauflage 11 gebildet. Das Ausgleichselement für das dritte Distanzteil wird passend zu dem Ausgleichselement für das zweite Distanzteil ausgewählt. Somit erfüllen zweites und drittes Distanzteil in Figur 3 die Funktion eines Distanzteils 51, 52, 55 in Figur 5a, 5b oder 5c.

In weiteren Ausführungsbeispielen wird statt der Ausgleichselemente eine Ausgleichsvorrichtung eingesetzt, die nach dem Verschweißen der Distanzteile mit dem Profilrohr entfernt werden.

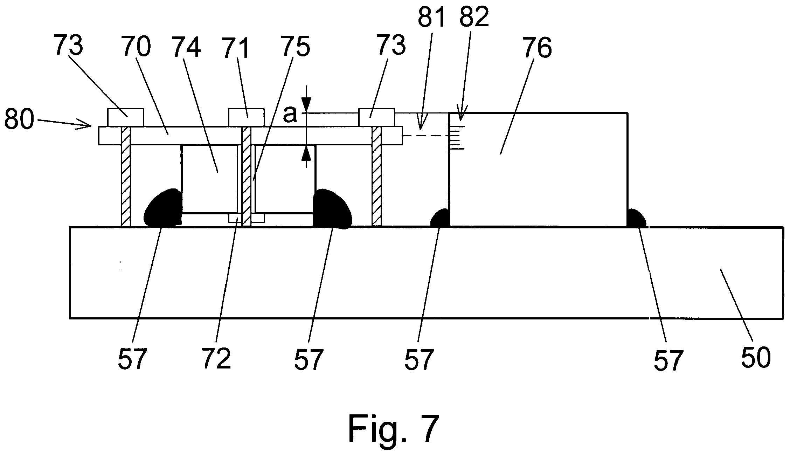

Eine solche Ausgleichsvorrichtung zeigt Figur 7.

Auf einem Profilrohr 50 ist ein erstes Distanzteil 76 aufgesetzt und durch Schweißnähte 57 befestigt. Nach Befestigung des ersten Distanzteils 76 wird eine Ausgleichsvorrichtung 80 auf die Oberseite des Profilrohrs aufgesetzt.

Die Ausgleichsvorrichtung umfasst einen Ausgleichsbalken 70, an dem ein zweites Distanzteil 74 durch eine Schraube 71 befestigt ist. Die Schraube 74 ist hierzu durch eine Bohrung 75 im zweiten Distanzteil 74 gesteckt und mit einer Mutter 72 gesichert.

An dem Ausgleichsbalken 70 sind zwei Justierschrauben 73 vorgesehen, die höhenverstellbar sind und einen Abstand zwischen Unterkante des Ausgleichsbalkens 70 und der Oberkante des zweiten Distanzteils 74 einstellen. Somit ist eine gewünschte Höhendifferenz zwischen den Auflageflächen des ersten Distanzteils 76 und des zweiten Distanzteils 74 einstellbar. Die Höhe der Auflagefläche des zweiten Distanzteils 74 kann dabei auch über der Höhe der Auflagefläche des ersten Distanzteils 76 liegen.

Nach Einstellen der gewünschten Höhendifferenz wird das zweite Distanzteil 74 mit dem Profilrohr 50 verbunden. Das Verbinden erfolgt stoffschlüssig, beispielsweise durch Schweißen. Das Material der stoffschlüssigen Verbindung überbrückt hierbei den Spalt, der durch die Ausgleichsvorrichtung zwischen zweiten Distanzteil 74 und Profilrohr 50 eingestellt wird.

Nach Herstellung der Verbindung, insbesondere nach Erstarren der Schweißnaht 57, wird die Ausgleichsvorrichtung, also der Ausgleichsbalken 70 mit der Schraube 71, der Mutter 72 und den Justierschrauben 73, entfernt.

Zur Erleichterung der gegenseitigen Ausrichtung weist das erste Distanzteil 76 einen Messpunkt oder eine Skala 82 auf. Eine Zielvorrichtung 81, beispielsweise ein Zielfernrohr oder ein Laser-Pointer, markieren die aktuell erreichte Position des zweiten Distanzteils 74 auf dem ersten Distanzteil 76.

In weiteren Ausführungsbeispielen ist der Fundamentrahmen als Motorschwinge ausgeführt, und es ist an der Unterseite des Profilrohrs eine Drehmomentstütze angebracht.
Bei einer Getriebe-Motor-Einheit wird ein Getriebe 2 auf einem ersten Distanzteil 18, 19, 24, 25, 51, 52 und ein Motor 1 auf einem zweiten Distanzteil 6, 7, 8, 22, 51, 52 montiert, wobei beide Distanzteile mit einem Profilrohr 32, einer Motorschwinge oder einem Fundamentrahmen, verschweißt sind. Bei mindestens einem Distanzteil 18, 19, 52 wird vor dem Verschweißen mit dem Profilrohr 32 ein Ausgleichselement 42, 54 eingelegt, um das Getriebe 2 an den Motor 1 anzugleichen. Die Schweißnaht 57 verbindet das Distanzteil mit dem Profilrohr 32 und überbrückt dabei das Ausgleichselement 42, 54.

### Bezugszeichenliste

1 Motor
2 Getriebe
3 Fundamentrahmen
4 Kupplung
5 Statorfuß
6 Motorauflage
7 Querblech
8 Querblech
9 Getriebefuß
10 Getriebeauflage
11 Getriebeauflage
12 Fußbefestigung
13 Fußbefestigung
14 Schraube
15 Schraube
16 Haubenauflage
17 Haube
18 Distanzblock
19 Distanzblock
20 Kopfblech
21 Langloch
22 Motorauflage
23 Haubenauflage
24 Auflagefläche
25 Auflagefläche
26 Auflagefläche
27 Auflagefläche
28 Befestigungsfuß
29 Befestigungsfuß
30 Auflagebereich
31 Auflagebereich
32 Profilrohr
40 Aufstellfläche
41 Befestigungsfläche
42 Ausgleichselement
50 Profilrohr
51 Distanzblock
52 Distanzblock
53 Abfall
54 Ausgleichselement
55 Distanzblock
56 Distanzblock
57 Schweißnaht
60 Fußblock
61 Fußwinkel
70 Ausgleichsbalken
71 Befestigungsschraube
72 Mutter
73 Justierschraube
74 Distanzteil
75 Bohrung
76 Distanzteil
80 Ausgleichsvorrichtung
81 Zielvorrichtung
82 Skala

## Patentansprüche

1. Fundamentrahmen oder Motorschwinge,
wobei eine erste Auflagefläche (26, 27) für einen Motor (1) vorgesehen ist und eine zweite Auflagefläche (24, 25) für ein Getriebe (2) vorgesehen ist,
wobei die Auflageflächen (24, 25, 26, 27) von unbearbeiteten Halbzeugen (6, 10, 11, 22) gebildet werden
und wobei die erste Auflagefläche (26, 27) von einem ersten Distanzteil (51, 52) umfasst ist
und die zweite Auflagefläche (24, 25) von einem zweiten Distanzteil (51, 52) umfasst ist,
wobei beide Distanzteile (51, 52) aus unbearbeiteten Halbzeugen (6, 10, 11, 22) durch Ablängen hergestellt sind
und beide Distanzteile (51, 52) mit einem Profilrohr (32, 50) stoffschlüssig durch eine Verbindung verbunden sind,
wobei bei mindestens einem Distanzteil (52, 74) mindestens ein in einen durch angrenzende Oberflächen gebildeten Hohlraum eingelegtes Ausgleichselement (42, 54), vorzugsweise eine Unterlegscheibe oder dergleichen Blechstück, oder ein Hohlraum zwischen dem Distanzteil (52, 74) und dem Profilrohr (32, 50) angeordnet ist,
wobei der Hohlraum von der stoffschlüssigen Verbindung (57) zumindest teilweise nach außen, vorzugsweise zumindest abschnittsweise oder vollständig auf allen offenen Seiten des Hohlraums, abgeschlossen wird,
**dadurch gekennzeichnet, dass** die stoffschlüssige Verbindung (57) durch mindestens eine Schweißnaht (57) gebildet wird, und die Schweißnaht (57) das Ausgleichselement (42, 54) nicht direkt berührt,
wobei die Verbindung die Verbindung eines ersten Teils (18, 19, 52, 74) mit einem zweiten Teil (32, 50) ist,
- so dass entweder das erste Teil (18, 19, 52, 74) mit dem zweiten Teil (32, 50) stoffschlüssig verbunden ist,
wobei zwischen ersten Teil (18, 19, 52, 74) und zweiten Teil (32, 50) ein Abstand eingehalten ist,
der von der stoffschlüssigen Verbindung (57) überbrückt wird,
der Abstand durch ein Ausgleichselement (42, 54) ausgefüllt wird und
die stoffschlüssige Verbindung (57) durch mindestens eine Schweißnaht gebildet wird,
die das Ausgleichselement (42, 54) oder einen den Abstand ausfüllenden Hohlraum zumindest teilweise umgibt,
wobei die Schweißnaht (57) ganz oder abschnittsweise um das Ausgleichselement (42, 54) herumgeführt ist, insbesondere so herumgeführt ist, dass das Ausgleichselement (42, 54) nicht herausfallen kann, und dass die Schweißnaht (57) das Ausgleichselement (42, 54) nicht direkt berührt
- oder dass das erste Teil (18, 19, 52, 74) mit dem zweiten Teil (32, 50) stoffschlüssig verbunden ist,
wobei zwischen ersten Teil (18, 19, 52, 74) und zweiten Teil (32, 50) ein Abstand eingehalten ist,
der von der stoffschlüssigen Verbindung (57) überbrückt wird,
der Abstand durch ein Ausgleichselement (42, 54), vorzugsweise eine Unterlegscheibe oder dergleichen Blechstück, ausgefüllt wird und die stoffschlüssige Verbindung durch mindestens eine Schweißnaht (57) gebildet wird,
die das Ausgleichselement (42, 54) oder einen den Abstand ausfüllenden Hohlraum zumindest teilweise umgibt,
wobei die Schweißnaht (57) nicht das erste Teil (18, 19, 52, 74) mit dem Ausgleichselement (42, 54) und nicht das zweite Teil (32, 50) mit dem Ausgleichselement (42, 54) verbindet und nicht das Ausgleichselement (42, 54) berührt,
- oder dass das erste Teil (18, 19, 52, 74) mit dem zweiten Teil (32, 50) stoffschlüssig verbunden ist,
wobei zwischen ersten Teil (18, 19, 52, 74) und zweiten Teil (32, 50) ein Abstand eingehalten ist,
der von der stoffschlüssigen Verbindung (57) überbrückt wird,
wobei der Abstand durch ein Ausgleichselement (42, 54), vorzugsweise eine Unterlegscheibe oder dergleichen Blechstück, ausgefüllt wird,
wobei das Ausgleichselement (42, 54) nicht aus einem schlackebildenden Material, aus Werkstoffen mit hohem Schmelzpunkt, die durch einen Schweißlichtbogen nicht angeschmolzen werden, oder Kupfer in Form eines wassergekühlten Rohres besteht, und die stoffschlüssige Verbindung
durch mindestens eine Schweißnaht (57) gebildet wird,
die das Ausgleichselement (42, 54) oder einen den Abstand ausfüllenden Hohlraum zumindest teilweise, vorzugsweise zumindest abschnittsweise an allen offenen Seiten des Hohlraums, umgibt und die das Ausgleichselement (42, 54) nicht direkt berührt.

2. Fundamentrahmen oder Motorschwinge nach Anspruch 1,
**dadurch gekennzeichnet, dass**
das erste Distanzteil (52, 74) zwei Flachstahl-Halbzeuge (6, 7, 8, 10, 11, 18, 19, 22) umfasst, die zu einer T-Form zusammengesetzt, insbesondere stoffschlüssig verbunden, sind
und/oder
das zweite Distanzteil (52, 74) vier Flachstahl-Halbzeuge (6, 7, 8, 10, 11, 18, 19, 22) umfasst, die zu einem Viereck zusammengesetzt, insbesondere stoffschlüssig verbunden, sind
und/oder
an den Seiten des Profilrohrs (32, 50) Befestigungswinkel (12, 13, 28, 61) angeordnet sind, deren jeweils einer Schenkel (41) mit der Seite des Profilrohrs (32, 50) stoffschlüssig verbunden ist
und deren jeweils anderer Schenkel (40) Mittel zur Befestigung des Fundamentrahmens auf einer Unterlage aufweist, insbesondere Bohrlöcher (21),
insbesondere wobei die Befestigungswinkel (12, 13, 28, 61) paarweise jeweils einander gegenüber beidseits des Profilsrohrs (32, 50) angeordnet sind.

3. Getriebe-Motor-Einheit,
**dadurch gekennzeichnet, dass**
ein Motor (1) auf einer ersten Auflagefläche (26, 27) eines Fundamentrahmens oder einer Motorschwinge nach einem der vorangegangenen Ansprüche angeordnet ist
und ein Getriebe (2) auf einer zweiten Auflagefläche (24, 25) eines Fundamentrahmens oder einer Motorschwinge nach einem der vorangegangenen Ansprüche angeordnet ist,
wobei zwischen Motor (1) und erster Auflagefläche (26, 27) Distanzscheiben eingeführt sind, die eine Fertigungstoleranz des Motors (1) ausgleichen.

4. Verfahren zur Herstellung einer Getriebe-Motor-Einheit **nach Anspruch 3,**
**dadurch gekennzeichnet, dass**
ein Fundamentrahmen (32, 50) oder eine Motorschwinge mit einer ersten Auflagefläche (26, 27) und einer zweiten Auflagefläche (24, 25) nach einem der vorangegangene Ansprüche hergestellt wird,
und auf der ersten Auflagefläche (26, 27) ein Motor (1) montiert wird
und auf der zweiten Auflagefläche (24, 25) ein Getriebe (2) montiert wird,
wobei durch das Einstellen des Ebenenabstandes die Motorwelle zur eintreibenden Welle des Getriebes (2) koaxial ausgerichtet wird,
insbesondere wobei bei Montage des Motors (1) auf der ersten Auflagefläche (26, 27) Distanzscheiben zur Feinjustage zwischen Motor (1) und Auflagefläche (26, 27) eingeführt werden.

5. Baureihe von Getriebe-Motor-Einheiten,
**dadurch gekennzeichnet, dass**
- jede Getriebe-Motor-Einheit **nach Anspruch 3** ausgebildet und/oder einem Verfahren **nach Anspruch 4** hergestellt ist,
- wobei jede Variante der Baureihe durch eine Differenz der Bauhöhe der Motorwelle über dem Statorfuß zu der Bauhöhe der eintreibenden Welle über dem Getriebefuß gekennzeichnet ist und die Differenz durch Ausgleichselemente (42, 54) zwischen einem Distanzteil (52, 74) und dem Fundamentrahmen (32, 50) oder der Motorschwinge eingestellt ist,
- die Distanzteile (51, 52, 74) aus gewalzten, vorzugsweise nicht weiter bearbeiteten, abgelängten, Flachstahl-Halbzeugen (6, 7, 8, 10, 11, 22) hergestellt sind, wobei bei mindestens zwei Varianten der Baureihe, für welche die Differenz der Bauhöhen unterschiedlich ist, die jeweils ersten und/oder die jeweils zweiten Distanzteile Flachstahl-Halbzeuge (6, 7, 8, 10, 11, 22) gleicher Materialstärke umfassen.

6. Baureihe nach Anspruch 5,
**dadurch gekennzeichnet, dass**
- Varianten der Baureihe einen Fundamentrahmen mit einem Profilrohr (32, 50) umfassen, wobei an mindestens einer Seitenfläche Befestigungswinkel (12, 13, 28, 29, 61) vorgesehen sind,
- wobei jede dieser Varianten durch eine Bauhöhe der abtreibenden Welle des Getriebes (2) über der Fußfläche (40) der Befestigungswinkel (12, 13, 28, 29, 61) gekennzeichnet ist,
- und mindestens zwei Varianten der Baureihe mit unterschiedlichen Bauhöhen der abtreibenden Welle identische Befestigungswinkel (12, 13, 28, 29, 61) aufweisen, die zur Einstellung der unterschiedlichen Bauhöhe in unterschiedlichen Positionen auf der Seitenfläche mit dem Profilrohr (32, 50) stoffschlüssig verbunden sind.

## Claims

1. A base frame or motor rocker,
wherein a first supporting surface (26, 27) for a motor (1) is provided,
and a second supporting surface (24, 25) for a gear mechanism (2) is provided,
wherein the supporting surfaces (24, 25, 26, 27) are formed by non-machined semi-finished products (6, 10, 11, 22)
and wherein the first supporting surface (26, 27) is surrounded by a first spacer part (51, 52)
and the second supporting surface (24, 25) is surrounded by a second spacer part (51, 52),
wherein both spacer parts (51, 52) are produced from non-machined semi-finished products (6, 10, 11, 22) by cutting into lengths
and both spacer parts (51, 52) are joined by a material-formed bond to a profile tube (32, 50) by a join,
wherein in at least one spacer part (52, 74) at least one compensation element (42, 54) placed in a cavity formed by adjoining surfaces, preferably a shim or similar sheet-metal piece, or a cavity is arranged between the spacer part (52, 74) and the profile tube (32, 50),
wherein the cavity is closed off by the material-formed join (57) at least partially towards the outside, preferably at least in portions or completely on all the open sides of the cavity,
**characterised in that** the material-formed join (57) is formed by at least one weld seam (57), and
the weld seam (57) does not directly contact the compensation element (42, 54), wherein the join is the join of a first part (18, 19, 52, 74) to a second part (32, 50),
- so that either the first part (18, 19, 52, 74) is joined to the second part (32, 50) by a material-formed bond,
wherein a spacing is maintained between the first part (18, 19, 52, 74) and the second part (32, 50),
which is bridged by the material-formed join (57),
the spacing is filled by a compensation element (42, 54), and
the material-formed join (57) is formed by at least one weld seam
which at least partially surrounds the compensation element (42, 54) or a cavity which fills the spacing,
wherein the weld seam (57) is guided entirely or in portions around the compensation element (42, 54), in particular is guided such that the compensation element (42, 54) cannot drop out, and that the weld seam (57) does not directly contact the compensation element (42, 54)
- or that the first part (18, 19, 52, 74) is joined to the second part (32, 50) by a material-formed bond,
wherein a spacing is maintained between the first part (18, 19, 52, 74) and the second part (32, 50)
which is bridged by the material-formed join (57),
the spacing being filled by a compensation element (42, 54), preferably a shim or similar sheet-metal piece, and the material-formed join is formed by at least one weld seam (57)
which at least partially surrounds the compensation element (42, 54) or a cavity which fills the spacing,
wherein the weld seam (57) does not join the first part (18, 19, 52, 74) to the compensation element (42, 54) and does not join the second part (32, 50) to the compensation element (42, 54) and does not touch the compensation element (42, 54),
- or that the first part (18, 19, 52, 74) is joined to the second part (32, 50) by a material-formed bond,
wherein a spacing is maintained between the first part (18, 19, 52, 74) and the second part (32, 50)
which is bridged by the material-formed join (57),
wherein the spacing is filled by a compensation element (42, 54), preferably a shim or similar sheet-metal piece,
wherein the compensation element (42, 54) does not consist of a slag-forming material, of materials with a high melting point which are not melted by a welding arc, or copper in the form of a water-cooled pipe [sic], and
the material-formed join is formed by at least one weld seam (57)
which surrounds the compensation element (42, 54) or a cavity filling the spacing at least partially, preferably at least in portions on all the open sides of the cavity, and which does not directly contact the compensation element (42, 54).

2. A base frame or motor rocker according to Claim 1,
**characterised in that**
the first spacer part (52, 74) comprises two flat-steel semi-finished products (6, 7, 8, 10, 11, 18, 19, 22) which are assembled to form a T-shape, in particular are joined by a material-formed bond,
and/or
the second spacer part (52, 74) comprises four flat-steel semi-finished products (6, 7, 8, 10, 11, 18, 19, 22) which are assembled to form a rectangle, in particular are joined by a material-formed bond,
and/or
on the sides of the profile tube (32, 50) there are arranged angled fastening pieces (12, 13, 28, 61), one arm (41) in each case of which is joined by a material-formed bond to the side of the profile tube (32, 50)
and the other arm (40) of which in each case has means for fastening the base frame to a base, in particular drill holes (21),
in particular wherein the angled fastening pieces (12, 13, 28, 61) are arranged in pairs in each case opposite one another on either side of the profile tube (32, 50).

3. A gear mechanism-motor unit,
**characterised in that**
a motor (1) is arranged on a first supporting surface (26, 27) of a base frame or a motor rocker according to one of the preceding claims
and a gear mechanism (2) is arranged on a second supporting surface (24, 25) of a base frame or a motor rocker according to one of the preceding claims,
wherein spacer discs are introduced between the motor (1) and the first supporting surface (26, 27), which discs compensate for a manufacturing tolerance of the motor (1).

4. A method for producing a gear mechanism-motor unit according to Claim 3,
**characterised in that**
a base frame (32, 50) or a motor rocker with a first supporting surface (26, 27) and a second supporting surface (24, 25) according to one of the preceding claims is produced,
and a motor (1) is mounted on the first supporting surface (26, 27) and a gear mechanism (2) is mounted on the second supporting surface (24, 25), wherein the motor shaft is oriented coaxially to the input shaft of the gear mechanism (2) by setting the plane spacing,
in particular wherein upon mounting the motor (1) on the first supporting surface (26, 27) spacer discs for fine adjustment are introduced between the motor (1) and the supporting surface (26, 27).

5. A series of gear mechanism-motor units,
**characterised in that**
- each gear mechanism-motor unit is designed according to Claim 3 and/or is produced [according to] a method according to Claim 4,
- wherein each variant of the series is **characterised by** a difference in the overall height of the motor shaft over the stator foot relative to the overall height of the input shaft over the gear mechanism foot, and the difference is set by compensation elements (42, 54) between a spacer part (52, 74) and the base frame (32, 50) or the motor rocker,
- the spacer parts (51, 52, 74) are produced from rolled, flat-steel semi-finished products (6, 7, 8, 10, 11, 22) which are preferably not machined further and are cut into lengths, wherein in at least two variants of the series, for which the difference in overall heights is different, the first spacer parts in each case and/or the second spacer parts in each case comprise flat-steel semi-finished products (6, 7, 8, 10, 11, 22) of the same material thickness.

6. A series according to Claim 5,
**characterised in that**
- variants of the series comprise a base frame with a profile tube (32, 50), with angled fastening pieces (12, 13, 28, 29, 61) being provided on at least one lateral face,
- each of these variants being **characterised by** an overall height of the output shaft of the gear mechanism (2) above the foot surface (40) of the angled fastening pieces (12, 13, 28, 29, 61),
- and at least two variants of the series with different overall heights of the output shaft having identical angled fastening pieces (12, 13, 28, 29, 61), which for setting the different overall height are joined by a material-formed bond to the profile tube (32, 50) in different positions on the lateral face.

## Revendications

1. Cadre de base ou chaise moteur,
dans lequel ou laquelle une première surface de support (26, 27) est prévue pour un moteur (1)
et une deuxième surface de support (24, 25) est prévue pour un réducteur (2),
dans lequel ou laquelle les surfaces de support (24, 25, 26, 27) sont formées par des produits semi-finis non usinés (6, 10, 11, 22)
et dans lequel ou laquelle la première surface de support (26, 27) est entourée par un premier élément d'espacement (51, 52)
et la deuxième surface de support (24, 25) est entourée par un deuxième élément d'espacement (51, 52),
dans lequel ou laquelle les deux éléments d'espacement (51, 52) sont fabriqués à partir de produits semi-finis non usinés (6, 10, 11, 22) par coupe à longueur
et les deux éléments d'espacement (51, 52) sont reliés à un tube profilé (32, 50) par une liaison avec apport de matière,
dans lequel ou laquelle, sur au moins un élément d'espacement (52, 74), est disposé au moins un élément de compensation (42, 54), de préférence une rondelle ou une pièce de tôle analogue, inséré dans une cavité formée par des surfaces adjacentes, ou une cavité entre l'entretoise (52, 74) et le tube profilé (32, 50),
dans lequel ou laquelle la cavité est fermée au moins partiellement vers l'extérieur, de préférence au moins sur certaines parties ou complètement sur tous les côtés ouverts de la cavité,
caractérisé(e) en ce que la liaison avec apport de matière (57) est formée par au moins une soudure (57), et la soudure (57) n'est pas en contact direct avec l'élément de compensation (42, 54), la liaison étant la liaison d'une première partie (18, 19, 52, 74) avec une deuxième partie (32, 50), de sorte
- soit que la première partie (18, 19, 52, 74) est reliée à la deuxième partie (32, 50) avec apport de matière,
un écart étant maintenu entre la première partie (18, 19, 52, 74) et la deuxième partie (32, 50),
lequel est ponté par la liaison avec apport de matière (57),
l'écart étant comblé par un élément de compensation (42, 54) et la liaison avec apport de matière (57) étant formée par au moins une soudure qui entoure au moins partiellement l'élément de compensation (42, 54) ou une cavité comblant l'écart,
la soudure (57) étant conduite entièrement ou sur certaines parties autour de l'élément de compensation (42, 54), en particulier de sorte que l'élément de compensation (42, 54) ne puisse pas tomber et que la soudure (57) ne soit pas en contact direct avec l'élément de compensation (42, 54),
- soit que la première partie (18, 19, 52, 74) est reliée à la deuxième partie (32, 50) avec apport de matière,
un écart étant maintenu entre la première partie (18, 19, 52, 74) et la deuxième partie (32, 50),
lequel est ponté par la liaison avec apport de matière (57),
l'écart étant comblé par un élément de compensation (42, 54), de préférence une rondelle ou une pièce de tôle analogue, et la liaison avec apport de matière est formée par au moins une soudure (57) qui entoure au moins partiellement l'élément de compensation (42, 54) ou une cavité comblant l'écart,
la soudure (57) ne reliant pas la première partie (18, 19, 52, 74) à l'élément de compensation (42, 54) et pas la deuxième partie (32, 50) à l'élément de compensation (42, 54) et n'étant pas en contact avec l'élément de compensation (42, 54),
- soit que la première partie (18, 19, 52, 74) est reliée à la deuxième partie (32, 50) avec apport de matière,
un écart étant maintenu entre la première partie (18, 19, 52, 74) et la deuxième partie (32, 50),
lequel est ponté par la liaison avec apport de matière (57),
l'écart étant comblé par un élément de compensation (42, 54), de préférence une rondelle ou une pièce de tôle analogue,
l'élément de compensation (42, 54) n'étant pas constitué d'un matériau formant du laitier, mais de matériaux à point de fusion élevé, qui ne sont pas fondus par un arc de soudage, ou de cuivre sous la forme d'un tube refroidi à l'eau et la liaison avec apport de matière étant formée par au moins une soudure (57) qui entoure l'élément de compensation (42, 54) ou une cavité comblant l'écart au moins partiellement, de préférence au moins sur certaines parties, sur tous les côtés ouverts de la cavité, et qui n'est pas en contact direct avec l'élément de compensation (42, 54).

2. Cadre de base ou chaise moteur selon la revendication 1,
caractérisé(e) en ce que
le premier élément d'espacement (52, 74) comprend deux produits semi-finis en acier plat (6, 7, 8, 10, 11, 18, 19, 22) qui sont assemblés pour former un T, en particulier reliés avec apport de matière
et/ou que
le deuxième élément d'espacement (52, 74) comprend quatre produits semi-finis en acier plat (6, 7, 8, 10, 11, 18, 19, 22) qui sont assemblés pour former un carré, en particulier reliés avec apport de matière
et/ou que
des équerres de fixation (12, 13, 28, 61) sont disposées sur les côtés du tube profilé (32, 50), dont une branche respective (41) est reliée avec apport de matière au côté du tube profilé (32, 50) et dont l'autre branche respective (40) présente des moyens pour fixer le cadre de base sur un support, en particulier des trous forés (21),
en particulier les équerres de fixation (12, 13, 28, 61) étant disposées par paires chaque fois l'une en face de l'autre des deux côtés du tube profilé (32, 50).

3. Unité moteur-réducteur,
**caractérisée en ce**
**qu'**un moteur (1) est disposé sur une première surface de support (26, 27) d'un cadre de base ou d'une chaise moteur selon l'une des revendications précédentes
et un réducteur (2) est disposé sur une deuxième surface de support (24, 25) d'un cadre de base ou d'une chaise moteur selon l'une des revendications précédentes,
des rondelles entretoises étant insérées entre le moteur (1) et la première surface de support (26, 27), lesquelles compensent une tolérance de fabrication du moteur (1).

4. Procédé de fabrication d'une unité moteur-réducteur selon la revendication 3,
**caractérisé en ce**
**qu'**un cadre de base (32, 50) ou une chaise moteur avec une première surface de support (26, 5, 27) et une deuxième surface de support (24, 25) est fabriqué(e) selon l'une des revendications précédentes,
et un moteur (1) est monté sur la première surface de support (26, 27) et un réducteur (2) est monté sur la deuxième surface de support (24, 25),
dans lequel l'arbre de moteur est aligné coaxialement avec l'arbre d'entrée du réducteur (2) par ajustement de l'écart entre les plans,
en particulier dans lequel, lors du montage du moteur (1) sur la première surface de support (26, 27), des rondelles entretoises sont insérées entre le moteur (1) et la surface de support (26, 27) pour le réglage fin.

5. Série d'unités moteur-réducteur,
**caractérisée en ce que**
- chaque unité moteur-réducteur est réalisée selon la revendication 3 et/ou fabriquée avec un procédé selon la revendication 4,
- chaque variante de la série étant **caractérisée par** une différence entre la hauteur de l'arbre de moteur au-dessus de la base de stator et la hauteur de l'arbre d'entrée au-dessus de la base de réducteur et la différence étant réglée par des éléments de compensation (42, 54) entre un élément d'espacement (52, 74) et le cadre de base (32, 50) ou la chaise moteur,
- les éléments d'espacement (51, 52, 74) sont fabriqués à partir de produits semi-finis en acier plat (6, 7, 8, 10, 11, 22) laminés, de préférence sans autre usinage, coupés à longueur, les premiers et/ou les deuxièmes éléments d'espacement respectifs comprenant des produits semi-finis en acier plat (6, 7, 8, 10, 11, 22) de même épaisseur de matériau pour au moins deux variantes de la série pour lesquelles la différence des hauteurs est différente.

6. Série selon la revendication 5,
**caractérisée en ce que**
- des variantes de la série comprennent un cadre de base avec un tube profilé (32, 50), des équerres de fixation (12, 13, 28, 29, 61) étant prévues sur au moins une surface latérale,
- chacune de ces variantes étant **caractérisée par** une hauteur de l'arbre de sortie du réducteur (2) au-dessus de la surface de base (40) des équerres de fixation (12, 13, 28, 29, 61),
- et au moins deux variantes de la série avec des hauteurs différentes de l'arbre de sortie présentent des équerres de fixation identiques (12, 13, 28, 29, 61) qui, pour régler la hauteur différente, sont reliés avec apport de matière au tube profilé (32, 50) dans des positions différentes sur la surface latérale.
